# EUROPÄISCHE PATENTSCHRIFT

(11) **EP 1 701 578 B1**
(45) Veröffentlichungstag und Bekanntmachung des Hinweises auf die Patenterteilung: **30.05.2012**
(21) Anmeldenummer: 06110517.7
(22) Anmeldetag: 28.02.2006
(51) Int. Cl.: H04W 16/24

(54) **Verfahren und Einrichtung zur Zuordnung von Funknetzzellen zu einer Gruppenzone**
Method and device for allocating cells to a group zone
Procédé et dispositif d'allocation des cellules à une zone de groupe

(30) Priorität: 09.03.2005 DE 102005011178
(43) Veröffentlichungstag der Anmeldung: 13.09.2006
(73) Patentinhaber: Vodafone Holding GmbH, 40213 Düsseldorf (DE)
(72) Erfinder: Holzer, Harald, 76698 Ubstadt-Weiher (DE); Schmitz, Peter, 64354 Reinheim (DE); Grosz-Weege, Josef, 47918 Tönisvorst (DE)
(74) Vertreter: Weisse, Renate

(56) Entgegenhaltungen:
- WO-A1-03/065751
- US-A1- 2003 096 621
- US-B1- 6 219 548

## Beschreibung

### Technisches Gebiet

Die Erfindung betrifft ein Verfahren zur Zuordnung von Funknetzzellen in einem Mobilfunknetz, insbesondere nach dem GSM- oder UMTS-Standard, wobei
a) das Mobilfunknetz Funknetzzellen aufweist, in welchem sich Gruppenmitglieder einer Gruppe jeweils mit einem Mobilfunkendgerät aufhalten,
b) eine Gruppenzone durch Zuordnen von Funknetzzellen von einer computergesteuerten Verwaltungs- und Zuordnungseinheit festgelegt wird und die einzelnen Gruppenmitglieder anhand ihrer Funknetzzellen, in denen sie sich aufhalten, lokalisiert werden.

Ferner betrifft die Erfindung eine Einrichtung zur Verwaltung und Zuordnung von Funknetzzellen in einem Mobilfunknetz, insbesondere nach dem GSM oder UMTS-Standard, wobei
a) eine computergestützte Verwaltungs- und Zuordnungseinheit vorgesehen ist, welche mit dem Mobilfunknetz gekoppelt ist,
b) das Mobilfunknetz Funknetzzellen aufweist, in welchem sich Gruppenmitglieder einer Gruppe jeweils mit einem Mobilfunkendgerät aufhalten, und
c) die computergestützte Verwaltungs- und Zuordnungseinheit zum Festlegen einer Gruppenzone durch Zuordnen von Funknetzzellen ausgebildet ist und Mittel zum Lokalisieren des Aufenthalts einzelner Gruppenmitglieder anhand ihrer Funknetzzellen vorgesehen sind.

### Stand der Technik

Mobilfunknetze, insbesondere nach dem GSM- und UMTS-Standard, verfügen über zahlreiche "Base Stations" (BS) mit wenigstens einem Funkmast bzw. einer Funkantenne. Ein Mobilfunkteilnehmer nimmt zur Kommunikation über das Mobilfunknetz mit seinem Mobilfunkendgerät Funkkontakt mit der ihm am nächsten stehenden Base Station auf.

Der Abdeckungsbereich von solchen Funkmasten wird als Funknetzzelle bezeichnet. Die Koordination von Kommunikationsanfragen und Herstellung einer Verbindung erfolgt über einen Base Station Controller (BSC) und eine Vermittlungsstelle, dem so genannten Mobile Switching Center (MSC).

Ein Mobilfunkteilnehmer kann sich innerhalb eines Mobilfunknetzes zwischen den Funknetzzellen frei bewegen. Dieser Vorgang wird in der Mobilfunkfachwelt als "Roaming" bezeichnet. Dabei wird er immer von Funknetzzelle zu Funknetzzelle weitergereicht. Das Mobilfunknetz bzw. der Mobilfunkbetreiber weiß somit immer, wo sich ein Mobilfunkteilnehmer aufhält und zwar mit einer Auflösung der Funknetzzellen. Voraussetzung ist jedoch, dass das Mobilfunkendgerät eingeschaltet ist. Je kleiner die Funknetzzelle ist, desto genauer kann ein Mobilfunkteilnehmer lokalisiert werden.

Mobilfunkendgeräte werden mittlerweile häufig von Polizei, Feuerwehr, Rettung- und Katastrophendienste verwendet. Solche öffentlichen Einsatzkräfte bilden oft Gruppen.

Die Mitglieder dieser Gruppen müssen während eines Einsatzes oft miteinander oder mit einer Leitstelle kommunizieren. Dabei ist es immer vorteilhaft, wenn die Leitstelle weiß, wo sich das einzelne Gruppenmitglied bzw. die Gruppe aufhält. Die einzelnen Gruppenmitglieder können, wie oben beschrieben, in dem Mobilfunknetz über die Funknetzzellen geortet werden. Für die Lokalisierung einer gesamten Gruppe im Mobilfunknetz sind keine Verfahren bekannt.

Die US 6,219,548 B1 offenbart ein Verfahren und ein System zum Aktualisieren eines Gruppenrufregisters (GCR) bei einem ersten MSC, wenn im Bereich eines zweiten MSC eine Funkzelle zu einer Gruppenzone hinzugefügt wird. Bei einem Sprachgruppenruf können alle Mitglieder einer Gruppe jeweils mit den anderen Mitgliedern über einen Rundruf kommunizieren. Ein solcher Gruppenruf ist üblicherweise nur in zuvor festgelegten Funkzellen möglich, welche in das GCR eingetragen und in ihrer Gesamtheit als Gruppenzone oder Gruppenrufzone bezeichnet werden. Diese Vorgehensweise kann bei einem möglichen Funkzellenwechsel eines sich bewegenden Gruppenrufteilnehmers zu einem unerwünschten Abbruch eines Gruppenrufs führen. Bekanntlich überlappen sich benachbarte Funkzellen, um einen störungsfreien Übergang zwischen Funkzellen zu ermöglichen. Dieser Vorgang wird von einem Mobilfunkendgerät durch permanentes Überwachen der Signalstärke aller verfügbaren Funkzellen unterstützt. Zudem erhält das Mobilfunkendgerät eine Informationsliste über benachbarte Funkzellen von dem Basisstationssystem. Wenn die Signalstärke einer benachbarten Funkzelle größer als die der aktuell benutzten ist, initiiert das Mobilfunkendgerät einen Wechsel zu dieser Funkzelle. Wenn aber das Mobilfunkendgerät an einem Gruppenruf teilnimmt und die neue Funkzelle nicht zur Gruppenzone gehört, wird der Gruppenruf für dieses Mobilfunkendgerät unterbrochen, obwohl es noch über die ursprüngliche Funkzelle daran teilnehmen könnte. Herkömmlich wird daher eine Modifikation der Informationsliste mit Hilfe des GCR durchgeführt. Nicht in dem GCR aufgeführte, benachbarte Funkzellen werden aus der Liste gestrichen. Dazu müssen in dem GCR auch benachbarte Funkzellen im Bereich eines anderen MSC mit eigenem GCR berücksichtigt werden. Dies kann bei einem Hinzufügen einer Funkzelle zu der Gruppenzone zu einem sehr aufwändigen, manuellen Aktualisieren nicht nur eines GCRs, sondern auch der GCRs benachbarter MCS führen. Daher schlägt die US 6,219,548 B1 ein Verfahren und ein System vor, die bei einer zu einer Gruppenzone hinzugefügten Funkzelle überprüfen, ob die Funkzelle an einen Bereich eines anderen MSC angrenzt und gegebenenfalls eine entsprechende Aktualisierung aller beteiligten GCRs durchführen.

In der WO 03/065751 A1 wird ein weiteres Verfahren und System zum Verhindern einer Unterbrechung eines Gruppenrufs mit festgelegter Gruppenzone durch einen Funkzellwechsel beschrieben. Ein Wechsel der Funkzelle während einer bestehenden Rufverbindung wird auch als Handover oder Handoff bezeichnet. Neben einer Rundrufnachricht mit Informationen über benachbarte Funkzellen wird zusätzlich eine Nachricht mit Gruppenzugehörigkeiten der Nachbarzellen an alle Mobilfunkendgeräte einer Funkzelle übermittelt. Ein an einem Gruppenruf teilnehmendes Mobilfunkendgerät im Bereich mehrere Funkzellen wird somit in die Lage versetzt, bereits vor einem Handover zu prüfen, ob eine neue Funkzelle zur Gruppenzone des Gruppenrufs gehört. Auf diese Weise wird eine unerwünschte Unterbrechung des Gruppenrufs durch einen Handover vermieden.

### Offenbarung der Erfindung

Aufgabe der Erfindung ist es daher, eine Gruppe von Mobilfunkteilnehmern in einem Mobilfunknetz zu lokalisieren.

Erfindungsgemäß wird die Aufgabe dadurch gelöst, dass bei einem Verfahren zur Zuordnung von Funknetzzellen in einem Mobilfunknetz der eingangs genannten Art
c) neben der Aufenthaltsfunknetzzelle die umliegenden Funknetzzellen jeweils der Gruppenzone zugeordnet werden, und
d) ein ständiges Überwachen der Zuordnung der Gruppenzone durch die computergestützte Verwaltungs- und Zuordnungseinheit und
e) Entfernen von Funknetzzellen, welche nicht unmittelbar an der Aufenthaltsfunknetzzelle wenigstens eines Gruppenmitglieds angrenzen aus der Zuordnung zur Gruppenzone erfolgt.

Weiterhin wird die Aufgabe durch eine Einrichtung der eingangs genannten Art zur Verwaltung und Zuordnung von Funknetzzellen in einem Mobilfunknetz dadurch gelöst, dass
d) Mittel zum Zuordnen neben der Aufenthaltsfunknetzzelle eines Gruppenmitglieds die unmittelbar an die Aufenthaltsfunknetzzelle angrenzenden Funknetzzellen vorgesehen sind,
e) die computergestützte Verwaltungs- und Zuordnungseinheit zum ständigen Überwachen der Zuordnung der Gruppenzone ausgebildet ist und
f) Mittel zum Entfernen von Funknetzzellen aus der Zuordnung zur Gruppenzone, welche nicht unmittelbar an der Aufenthaltsfunknetzzelle wenigstens eines Gruppenmitglieds angrenzen, vorgesehen sind.

Die Erfindung beruht auf dem Prinzip Funknetzzellen, die im Bereich eines Gruppenmitgliedes liegen einer Gruppenzone zuzuordnen. Dadurch lässt sich die Gruppe als Ganzes immer im Mobilfunknetz lokalisieren.

Die Erfindung sieht ferner vor, dass die Zuordnung der Gruppenzone ständig durch die computergestützte Verwaltung- und Zuordnungseinheit überwacht wird. Damit wird insbesondere erreicht, dass die Gruppenzone schnell an sich ändernde Formationen, beispielsweise durch Bewegung von den Gruppemnitgliedern oder auch durch hinzukommen von neuen oder weggehen von alten Gruppenmitgliedern angepasst werden kann.

Bei der erfindungsgemäßen Einrichtung sind Mittel zum Entfernen von Funknetzzellen aus der Zuordnung zur Gruppenzone vorgesehen, welche nicht unmittelbar an der Aufenthaltsfunknetzzelle wenigstens eines Gruppenmitglieds angrenzen. Damit wird die Gruppenzone immer auf die tatsächliche räumliche Ausdehnung der Gruppe angepasst. Überflüssige Daten werden nicht weiterverwendet.

In einer vorteilhaften Ausgestaltung des erfindungsgemäßen Verfahrens wird der Rand der Gruppenzone durch die äußersten Funknetzzellen gebildet wird, die den Gruppenmitgliedern zugeordnet sind. Damit lässt sich auch die Fläche, die von der Gruppe abgedeckt wird, bestimmen.

Eine bevorzugte Variante des erfindungsgemäßen Verfahrens ergibt sich dadurch, dass die Gruppenzone entsprechend der Bewegung der Gruppenmitglieder beweglich ausgebildet ist. Dadurch ist die Zone, in der sich die Gruppenmitglieder bewegen, nicht starr sondern dynamisch. Die gesamte Gruppenzone bewegt sich immer entsprechend der Gruppenmitglieder.

Es zeigt sich als besonders vorteilhaft, wenn auch die Größe der Gruppenzone variabel ausgebildet ist. Durch diese Maßnahmen können die Gruppenmitglieder sich beispielsweise in Funknetzzellen bewegen, wobei sich die Gruppenzone dann entsprechend anpasst. Dabei kann die Gruppenzone einmal größer und ein anderes Mal kleiner werden.

Insbesondere zur Vermeidung von überflüssigen Daten, die sich bei der Verwaltung einer solchen Gruppenzone ergeben können, zeigte sich als vorteilhaft, wenn sich überschneidende Funknetzzellen nur einmal der Gruppenzone zugeordnet werden. Auf diese Weise wird vermieden, dass Daten von Funknetzzellen doppelt vorhanden sind. In diesem Zusammenhang zeigte sich auch als besonders vorteilhaft, dass Funknetzzellen, welche nicht unmittelbar an der Aufenthaltsfunknetzzelle wenigstens eines Gruppenmitglieds angrenzen aus der Zuordnung zur Gruppenzone entfernt werden.

In einer vorteilhaften Ausgestaltung der erfindungsgemäßen Einrichtung zur Verwaltung und Zuordnung von Funknetzzellen in einem Mobilfunknetz wird entsprechend zu dem erfindungsgemäßen Verfahren der Rand der Gruppenzone durch die äußersten Funknetzzellen gebildet, die den Gruppenmitgliedern zugeordnet sind. Damit lässt sich auch die Fläche die von der Gruppe abgedeckt wird bestimmen.

In einer bevorzugten Ausgestaltung der erfindungsgemäßen Einrichtung ist die Gruppenzone entsprechend der Bewegung der Gruppenmitglieder beweglich ausgebildet. Damit folgt die Gruppenzone immer der Bewegung der Gruppe. Vorzugsweise ist die Größe der Gruppenzone dann variabel vorgesehen.

Zur Reduzierung von überflüssigen Daten sind in einer vorteilhaften Variante der erfindungsgemäßen Einrichtung Mittel zum einmaligen Zuordnen von sich überschneidende Funknetzzellen der Gruppenzone vorgesehen. Durch diese Maßnahme wird sichergestellt, dass jede Funknetzzelle, die der Gruppenzone zugeordnet ist, auch nur ein einziges Mal berücksichtigt wird.

Zum Kontrollieren der Gruppenzone sind vorzugsweise Mittel zum Überwachen der Gruppenzone vorgesehen.

Weitere Vorteile ergeben sich aus dem Gegenstand der Unteransprüche, sowie den Figuren mit den dazugehörigen Beschreibungen.

### Kurze Beschreibung der Zeichnung

- Fig. 1: zeigt in einer schematischen Prinzipskizze einen Ausschnitt eines Mobilfunknetzes mit Funknetzzellen, aus denen eine Gruppenzone gebildet wurde.
- Fig. 2: zeigt in einer schematischen Prinzipskizze einen Ausschnitt eines Mobilfunknetzes mit Funknetzzellen, bei denen sich die Gruppenzone gegenüber Fig. 1 bewegt hat.

### Bevorzugtes Ausführungsbeispiel

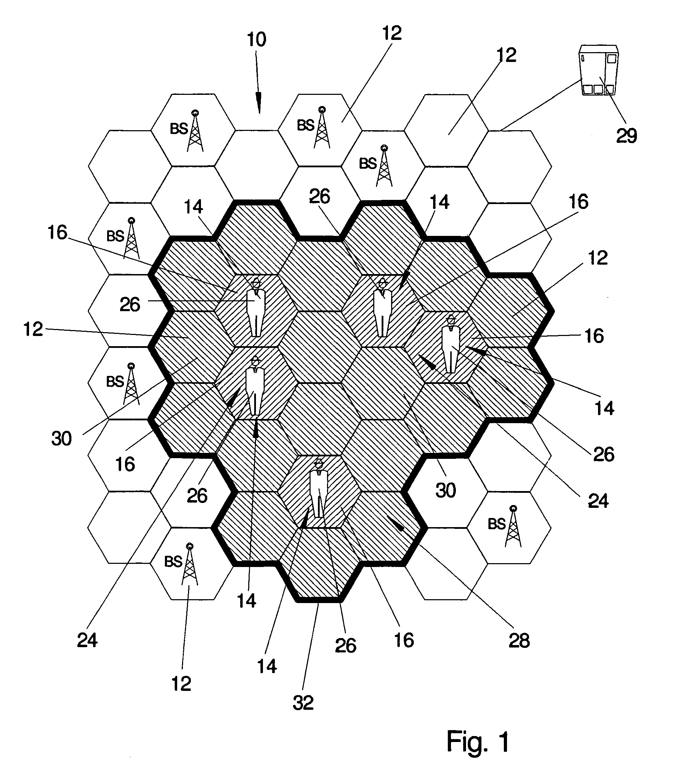

In Fig. 1 wird in einer schematischen Prinzipskizze ein Ausschnitt eines Mobilfunknetzes 10 dargestellt. Das Mobilfunknetz 10 setzt sich aus zahlreichen Funknetzzellen 12 zusammen. Zur Vereinfachung sind die Funknetzzellen 12 als Sechsecke gezeichnet.

Jede Funknetzzelle 12 verfügt jeweils über eine Base Station BS. In der Abbildung sind beispielhaft einige Base Stationen BS in den Funknetzzellen 12 des Mobilfunknetzes 10 dargestellt. Jede Funknetzzelle 12 enthält eine Basestation wie es uns wird in der Realität durch den Abdeckungsbereich einer solchen Base Station BS gebildet. Die Koordination von Kommunikationsanfragen und Herstellung einer Verbindung erfolgt über einen nicht dargestellten Base Station Controller (BSC) und eine nicht dargestellte Vermittlungsstelle, dem so genannten Mobile Switching Center (MSC).

Im Bereich des Mobilfunknetzes 10 bzw. in den Funknetzzellen 12 halten sich Mobilfunkteilnehmer 14 auf. Die Mobilfunkteilnehmer 14 sind als Männchen dargestellt und verfügen über ein Mobilfunkendgerät, mit dem sie über das Mobilfunknetz 10 kommunizieren können. Die Funknetzzellen 12, in denen sich die Mobilfunkteilnehmer 14 aufhalten werden als Aufenthaltfunkzellen 16 bezeichnet und sind durch besondere Schraffur kenntlich gemacht.

Die in vorliegenden Figuren dargestellten Mobilfunkteilnehmer 14 gehören zu einer Gruppe 24, beispielsweise einer Einsatzgruppe der Polizei oder Feuerwehr. Die zu der Gruppe 24 gehörenden Mobilfunkteilnehmer 14 werden daher auch als Gruppenmitglieder 26 bezeichnet. Nach dem erfindungsgemäßen Verfahren werden die Gruppenmitglieder 26 zunächst in ihrer Aufenthaltfunkzellen 16 lokalisiert.

Aus den Aufenthaltfunknetzzellen 16 der Gruppenmitglieder 26 wird eine Gruppenzone 28 definiert. Der Gruppenzone 28 werden ferner alle Funknetzzellen 12 neben den Aufenthaltfunknetzzellen 16 zugeordnet, die eine der Aufenthaltfunknetzzellen 16 umgeben. Dabei werden sich überschneidende Funknetzzellen 30 nur einfach berücksichtigt. Die Zuordnung der Funknetzzellen 12 bzw. 16 zu der Gruppenzone 28 erfolgt über einen computergestützte Verwaltung- und Zuordnungseinheit 29, die mit dem Mobilfunknetz 10 in geeigneter Weise, z.B. über die Vermittlungsstelle (MSC), gekoppelt ist. Der Rand 32 der Gruppenzone 28 wird nun von den äußeren Funknetzzellen 34 der Gruppenzone 28 gebildet. Damit lässt sich die räumliche Fläche, in der sich die Gruppe 24 aufhält bestimmen.

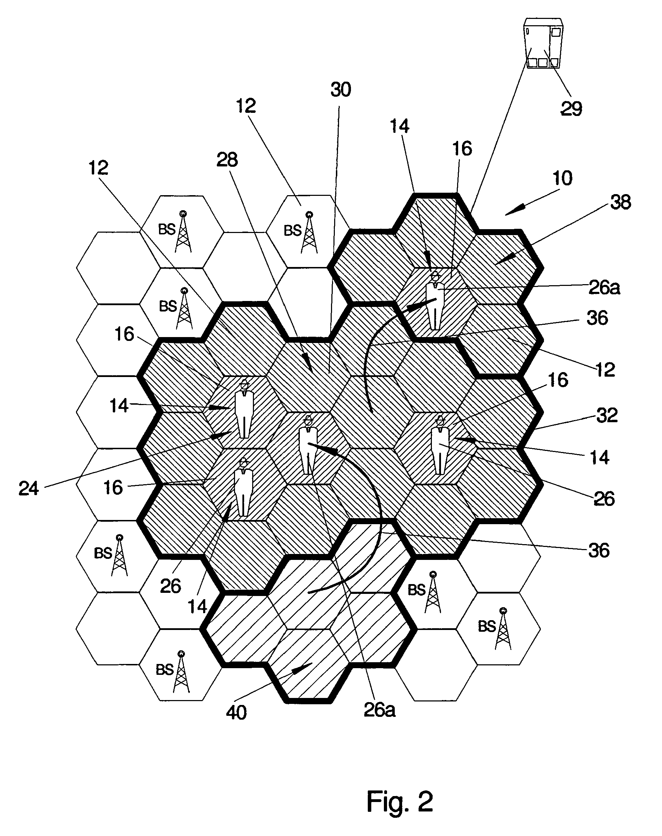

In Figur 2 wird analog zu Figur 1 ein Mobilfunknetz 10 dargestellt. Gleiche Bestandteile werden daher auch mit sich entsprechenden Bezugszeichen bezeichnet. Gegenüber der Figur 1 haben sich in dieser Abbildung zwei der Gruppenmitglieder 26a durch Roaming im Mobilfunknetz 10 bewegt. Pfeile 36 deuten die Bewegung an. Die Gruppenzone 28 wird daher der Gruppe 24 neu zugeordnet. Nach dieser neuen Zuordnung ist auf der einen Seite ein Teil 38 zu der Gruppenzone 28 hinzugekommen, auf der anderen Seite wurde ein Teil 40 von der Gruppenzone 28 entfernt. Der von der Gruppenzone 28 entfernte Teil 40 ist zur besseren Darstellung etwas grober schraffiert. Der hinzugekommene Teil weist die gleiche Schraffur, wie der übrige Teil der Gruppenzone 28 auf.

Wie leicht zu erkennen ist, kann die Größe der Gruppenzone 28 variiert werden. Voraussetzung dafür ist, dass sich Gruppenmitglieder 26 im Mobilfunknetz 10 entweder auseinander oder aufeinander zu bewegen. Je nachdem, wie dicht die Gruppenmitglieder 26 beieinander sind, ist auch vorstellbar, dass die Gruppenzone 28 aus mehreren zusammenhängenden Bestandteilen besteht.

Die Erfindung sieht ferner vor, dass die Zuordnung der Gruppenzone 28 ständig durch die computergestützte Verwaltung- und Zuordnungseinheit 29 überwacht wird. Damit wird insbesondere erreicht, dass die Gruppenzone 28 schnell an sich ändernde Formationen, beispielsweise durch Bewegung von den Gruppenmitgliedern 26 oder auch durch hinzukommen von neuen oder weggehen von alten Gruppenmitgliedern 26 angepasst werden kann.

## Patentansprüche

1. Verfahren zur Zuordnung von Funknetzzellen (12) in einem Mobilfunknetz (10), insbesondere nach dem GSM- oder UMTS-Standard, wobei
a) das Mobilfunknetz (10) Funknetzzellen (16) aufweist, in welchem sich Gruppenmitglieder (26) einer Gruppe (24) jeweils mit einem Mobilfunkendgerät aufhalten,
b) eine Gruppenzone (28) durch Zuordnen von Funknetzzellen (12, 16) von einer computergesteuerten Verwaltungs- und Zuordnungseinheit (29) festgelegt wird und die einzelnen Gruppenmitglieder (26) anhand ihrer Funknetzzellen (16), in denen sie sich aufhalten, lokalisiert werden
**dadurch gekennzeichnet, dass**
c) neben der Aufenthaltsfunknetzzelle (16) die umliegenden Funknetzzellen (12) jeweils der Gruppenzone (28) zugeordnet werden, und
d) ein ständiges Überwachen der Zuordnung der Gruppenzone (28) durch die computergestützte Verwaltungs- und Zuordnungseinheit (29) und
e) ein Entfernen von Funknetzzellen (12), welche nicht unmittelbar an der Aufenthaltsfunknetzzelle (16) wenigstens eines Gruppenmitglieds (26) angrenzen aus der Zuordnung zur Gruppenzone (28) erfolgt.

2. Verfahren zur Zuordnung von Funknetzzellen (12) in einem Mobilfunknetz (10) nach Anspruch 1, **dadurch gekennzeichnet, dass** der Rand (32) der Gruppenzone (28) durch die äußersten Funknetzzellen (12) gebildet wird, die den Gruppenmitgliedern (26) zugeordnet sind.

3. Verfahren zur Zuordnung von Funknetzzellen (12) in einem Mobilfunknetz (10) nach einem der Ansprüche 1 oder 2, **dadurch gekennzeichnet, dass** die Gruppenzone (28) entsprechend der Bewegung der Gruppenmitglieder (26) beweglich ausgebildet ist.

4. Verfahren zur Zuordnung von Funknetzzellen (12) in einem Mobilfunknetz (10) nach einem der Ansprüche 1 bis 3, **dadurch gekennzeichnet, dass** die Größe der Gruppenzone (28) variabel ausgebildet ist.

5. Verfahren zur Zuordnung von Funknetzzellen (12) in einem Mobilfunknetz (10) nach einem der Ansprüche 1 bis 5, **dadurch gekennzeichnet, dass** sich überschneidende Funknetzzellen (30) nur einmal der Gruppenzone (28) zugeordnet werden.

6. Einrichtung zur Verwaltung und Zuordnung von Funknetzzellen (12) in einem Mobilfunknetz (10), insbesondere nach dem GSM oder UMTS-Standard, wobei
a) eine computergestützte Verwaltungs- und Zuordnungseinheit (29) vorgesehen ist, welche mit dem Mobilfunknetz (10) gekoppelt ist,
b) das Mobilfunknetz (10) Funknetzzellen (16) aufweist, in welchem sich Gruppenmitglieder (26) einer Gruppe (24) jeweils mit einem Mobilfunkendgerät aufhalten,
c) die computergestützte Verwaltungs- und Zuordnungseinheit (29) zum Festlegen einer Gruppenzone (28) durch Zuordnen von Funknetzzellen (12, 16) ausgebildet ist und Mittel zum Lokalisieren des Aufenthalts einzelner Gruppenmitglieder (46) anhand ihrer Funknetzzellen (16) vorgesehen sind,
**dadurch gekennzeichnet, dass**
d) Mittel zum Zuordnen neben der Aufenthaltsfunknetzzelle (16) eines Gruppenmitglieds (26) die unmittelbar an die Aufenthaltsfunknetzzelle (16) angrenzenden Funknetzzellen (12) vorgesehen sind,
e) die computergestützte Verwaltungs- und Zuordnungseinheit (29) zum ständigen Überwachen der Zuordnung der Gruppenzone (28) ausgebildet ist und
f) Mittel zum Entfernen von Funknetzzellen (12) aus der Zuordnung zur Gruppenzone (28), welche nicht unmittelbar an der Aufenthaltsfunknetzzelle (16) wenigstens eines Gruppenmitglieds (26) angrenzen, vorgesehen sind.

7. Einrichtung zur Verwaltung und Zuordnung von Funknetzzellen (12) in einem Mobilfunknetz (10) nach Anspruch 6, **dadurch gekennzeichnet, dass** der Rand (32) der Gruppenzone (28) durch die äußersten Funknetzzellen (12) gebildet wird, die den Gruppenmitgliedern (26) zugeordnet sind.

8. Einrichtung zur Verwaltung und Zuordnung von Funknetzzellen (12) in einem Mobilfunknetz (10) nach einem der Ansprüche 6 oder 7, **dadurch gekennzeichnet, dass** die Gruppenzone (28) entsprechend der Bewegung der Gruppenmitglieder (26) beweglich ausgebildet ist.

9. Einrichtung zur Verwaltung und Zuordnung von Funknetzzellen (12) in einem Mobilfunknetz (10) nach einem der Ansprüche 6 bis 8, **dadurch gekennzeichnet, dass** die Größe der Gruppenzone (28) variabel vorgesehen ist.

10. Einrichtung zur Verwaltung und Zuordnung von Funknetzzellen (12) in einem Mobilfunknetz (10) nach einem der Ansprüche 6 bis 9, **gekennzeichnet durch** Mittel zum einmaligen Zuordnen von sich überschneidende Funknetzzellen (30) der Gruppenzone (28).

## Claims

1. A method for allocating radio network cells (12) in a mobile radio network (10), in particular according to the GSM or UMTS standard, wherein
a) the mobile radio network (10) comprises radio network cells (16) in which group members (26) of a group (24) reside each with a mobile terminal,
b) a group zone (28) is defined by allocating radio network cells (12, 16) by a computer-based management and allocation unit (29), and the individual group members (26) are localized on the basis of their radio network cells (16) in which they reside,
**characterized in that**
c) besides the residence radio network cell (16) the surrounding radio network cells (12) are allocated to the group zone (28) respectively, and
d) a permanent monitoring of the allocation of the group zone (28) is carried out by the computer-based management and allocation unit (29) and
e) a removal of radio network cells (12) which are not immediately adjacent to the residence radio network cell (16) of at least one group member (26) from the allocation to the group zone (28) is carried out.

2. A method for allocating radio network cells (12) in a mobile radio network (10) according to claim 1, **characterized in that** the edge (32) of the group zone (28) is formed by the outermost radio network cells (12) which are allocated to the group members (26).

3. A method for allocating radio network cells (12) in a mobile radio network (10) according to one of claims 1 or 2, **characterized in that** the group zone (28) is designed movable corresponding to the movement of the group members (26).

4. A method for allocating radio network cells (12) in a mobile radio network (10) according to one of claims 1 to 3, **characterized in that** the size of the group zone (28) is designed variable.

5. A method for allocating radio network cells (12) in a mobile radio network (10) according to one of claims 1 to 5, **characterized in that** overlapping radio network cells (30) are allocated to the group zone (28) only once.

6. A device for management and allocation of radio network cells (12) in a mobile radio network (10), in particular according to the GSM or UMTS standard, wherein
a) a computer-based management and allocation unit (29) is provided which is coupled to the mobile radio network (10),
b) the mobile radio network (10) comprises radio network cells (16) in which group members (26) of a group (24) reside each with a mobile terminal,
c) the computer-based management and allocation unit (29) is configured for defining a group zone (28) by allocating radio network cells (12, 16), and means for locating the residence of individual group members (46) based on their radio network cells (16) are provided,
**characterized in that**
d) means for allocating besides the residence radio network cell (16) of a group member (26) the radio network cells (12) immediately adjacent to the residence radio network cell (16) are provided,
e) the computer-based management and allocation unit (29) is configured for continuously monitoring the allocation of the group zone (28) and
f) means for removing radio network cells (12) from the allocation to the group zone (28) which are not immediately adjacent to the residence radio network cell (16) of at least one group member (26) are provided.

7. A device for management and allocation of radio network cells (12) in a mobile radio network (10) according to claim 6, **characterized in that** the edge (32) of the group zone (28) is formed by the outermost radio network cells (12) which are allocated to the group members (26).

8. A device for management and allocation of radio network cells (12) in a mobile radio network (10) according to one of claims 6 or 7, **characterized in that** the group zone (28) is configured movable corresponding to the movement of the group members (26).

9. A device for management and allocation of radio network cells (12) in a mobile radio network (10) according to one of claims 6 to 8, **characterized in that** the size of the group zone (28) is provided variable.

10. A device for management and allocation of radio network cells (12) in a mobile radio network (10) according to one of claims 6 to 9, **characterized by** means for a singular allocation of overlapping radio network cells (30) of the group zone (28).

## Revendications

1. Procédé pour l'affectation de cellules de réseau de radiotéléphonie (12) dans un réseau de radiotéléphonie mobile (10), notamment d'après la norme GSM ou UMTS,
(a) le réseau de radiotéléphonie mobile (10) présentant des cellules de réseau de radiotéléphonie (16) dans lesquelles résident les membres (26) d'un groupe (24), accompagnés chacun d'un terminal de radiotéléphonie mobile,
(b) une zone de groupe (28) étant définie par affectation des cellules de réseau de radiotéléphonie (12, 16) par une unité de gestion et d'affectation (29) commandée par ordinateur, et chacun des membres du groupe (26) étant localisé à l'aide de sa cellule de réseau de radiotéléphonie (16) dans laquelle il réside,
**caractérisé en ce que**
(c) les cellules de réseau de radiotéléphonie (12) adjacentes sont affectées, outre la cellule de réseau de radiotéléphonie de résidence (16), chacune à la zone de groupe (28), et
(d) un contrôle permanent de l'affectation de la zone de groupe (28) est effectué par l'unité de gestion et d'affectation (29) commandée par ordinateur et
(e) une suppression de l'affectation à la zone de groupe (28) des cellules de réseau de radiotéléphonie (12), n'étant pas directement adjacentes à la cellule de réseau de radiotéléphonie de résidence (16) d'au moins un membre de groupe (26), a lieu.

2. Procédé pour l'affectation de cellules de réseau de radiotéléphonie (12) dans un réseau de radiotéléphonie mobile (10) selon la revendication 1, **caractérisé en ce que** le bord (32) de la zone de groupe (28) est formé par les cellules de réseau de radiotéléphonie (12) se trouvant le plus à l'extérieur qui sont affectées aux membres de groupe (26).

3. Procédé pour l'affectation de cellules de réseau de radiotéléphonie (12) dans un réseau de radiotéléphonie mobile (10) selon l'une quelconque des revendications 1 ou 2, **caractérisé en ce que** la zone de groupe (28) présente une configuration mobile établie en fonction du déplacement des membres du groupe (26).

4. Procédé pour l'affectation de cellules de réseau de radiotéléphonie (12) dans un réseau de radiotéléphonie mobile (10) selon l'une quelconque des revendications 1 à 3, **caractérisé en ce que** la taille de la zone de groupe (28) présente une configuration variable.

5. Procédé pour l'affectation de cellules de réseau de radiotéléphonie (12) dans un réseau de radiotéléphonie mobile (10) selon l'une quelconque des revendications 1 à 5, **caractérisé en ce que** les cellules de réseau de radiotéléphonie (30) s'entrecoupant sont affectées une seule fois à la zone de groupe (28).

6. Dispositif pour la gestion et l'affectation de cellules de réseau de radiotéléphonie (12) dans un réseau de radiotéléphonie mobile (10), notamment d'après la norme GSM ou UMTS,
(a) une unité de gestion et d'affectation (29) commandée par ordinateur et couplée au réseau de radiotéléphonie mobile (10) étant prévue,
(b) le réseau de radiotéléphonie mobile (10) présentant des cellules de réseau de radiotéléphonie (16) dans lesquelles résident les membres (26) d'un groupe (24), accompagnés chacun d'un terminal de radiotéléphonie mobile,
(c) l'unité de gestion et d'affectation (29) commandée par ordinateur étant configurée pour définir une zone de groupe (28) par affectation de cellules de réseau de radiotéléphonie (12, 16), et des moyens étant prévus pour la localisation de la résidence de chacun des membres de groupe (46) à l' aide de sa cellule de réseau de radiotéléphonie,
**caractérisé en ce que**
(d) des moyens pour l'affectation des cellules de réseau de radiotéléphonie (12) directement adjacentes à la cellule de réseau de radiotéléphonie de résidence (16) sont prévus outre la cellule de réseau de radiotéléphonie de résidence (16),
(e) l'unité de gestion et d'affectation (29) commandée par ordinateur est configurée pour le contrôle permanent de l'affectation de la zone de groupe (28) et
(f) des moyens sont prévus pour supprimer de l'affectation à la zone de groupe (28) des cellules de réseau de radiotéléphonie (12), n'étant pas directement adjacentes à la cellule de réseau de radiotéléphonie de résidence (16) d'au moins un membre de groupe (26).

7. Dispositif de gestion et d'affectation de cellules de réseau de radiotéléphonie (12) dans un réseau de radiotéléphonie mobile (10) selon la revendication 6, **caractérisé en ce que** le bord (32) de la zone de groupe (28) est formé par les cellules de réseau de radiotéléphonie (12) se trouvant le plus à l'extérieur qui sont affectées aux membres de groupe (26).

8. Dispositif de gestion et d'affectation de cellules de réseau de radiotéléphonie (12) dans un réseau de radiotéléphonie mobile (10) selon l'une quelconque des revendications 6 ou 7, **caractérisé en ce que** la zone de groupe (28) présente une configuration mobile établie en fonction du déplacement des membres du groupe (26).

9. Dispositif de gestion et d'affectation de cellules de réseau de radiotéléphonie (12) dans un réseau de radiotéléphonie mobile (10) selon l'une quelconque des revendications 6 ou 8, **caractérisé en ce que** la taille de la zone de groupe (28) présente une configuration variable.

10. Dispositif de gestion et d'affectation de cellules de réseau de radiotéléphonie (12) dans un réseau de radiotéléphonie mobile (10) selon l'une quelconque des revendications 6 à 9, **caractérisé par** des moyens destinés à affecter une seule fois les cellules de réseau de radiotéléphonie (30) s'entrecoupant de la zone de groupe (28).
